# EUROPÄISCHE PATENTANMELDUNG

(11) **EP 3 584 909 A1**
(43) Veröffentlichungstag der Anmeldung: **25.12.2019**
(21) Anmeldenummer: 18178568.4
(22) Anmeldetag: 19.06.2018
(51) Int. Cl.: H02K 5/20, B60K 6/20, B60K 7/00, H02K 7/00, H02K 9/19, H02K 1/32

(54) **ELEKTRISCHE MASCHINE MIT EINER FLÜSSIGKEITSMANTELKÜHLUNG**

(71) Anmelder: Siemens Aktiengesellschaft, 80333 München (DE)
(72) Erfinder: Körner, Olaf, 90469 Nürnberg (DE); Sperova, Alice, 90537 Feucht (DE); Mucha, Oana, 90453 Nürnberg (DE); Wetzel, Wolfgang, 91074 Herzogenaurach (DE)

(57) **Zusammenfassung**

Die Erfindung betrifft eine elektrische Maschine (1) mit
- einem Stator (5), mit einem Wicklungssystem (6), dass in Nuten eines axial gestapelten Blechpakets angeordnet ist und an den Stirnseiten des Blechpakets Wickelköpfe (7) ausbildet,
- einem Rotor (8), der drehfest mit einer Welle (4) verbunden ist, und im Betrieb in elektromagnetischer Wechselwirkung mit dem Wicklungssystem (6) des Stators (5) steht, wobei der Rotor (8) axial verlaufende Ausnehmungen (14) aufweist, die einem Kühlmittelfluss dienen,
- einem Flüssigkeitsmantelgehäuse (2), das den Stator (5) umfänglich umgibt und sich axial zumindest über die axiale Länge des Blechpakets des Stators (5) erstreckt,
- Lagerschilden (3), die die Welle (4) stützen und zusammen mit dem Flüssigkeitsmantelgehäuse (2) das Innere der elektrischen Maschine (1) abdichten,
- am Außenumfang des Flüssigkeitsmantelgehäuses (2) axial verlaufende Kühlkanäle (13), die zusammen mit Ausnehmungen (14) des Rotors (8) einen geschlossenen Innenkühlkreislauf innerhalb der elektrischen Maschine (1) bilden,
- wobei die elektrische Maschine (1) über zumindest einige Leisten (9) der Kühlkanäle (13) am Außenumfang des Flüssigkeitsmantelgehäuses (2) an oder innerhalb einem Fahrzeug befestigbar ist.

## Beschreibung

Die Erfindung betrifft eine elektrische Maschine mit einer Wassermantelkühlung und deren Einsatz, insbesondere bei elektrisch angetriebenen Fahrzeugen.

Dynamoelektrische Maschinen, z.B. Asynchronmaschinen mit Käfigläufern oder permanenterregte Maschinen sind, falls sie hoch ausgenutzt und gekapselt ausgeführt sind, mit einer Wassermantelkühlung versehen. Diese ist erforderlich um u.a. eine Entwärmung des Läufers und gegebenenfalls des Wickelkopfes des Stators zu gewährleisten. Um dabei den Stator des Blechpakets möglichst vollflächig zu kühlen, und um damit die Eisenverluste, also Hysterese- und Wirbelstromverluste der Bleche an den Wassermantel effizient abzuführen, wird dieser möglichst vollflächig am Außenumfang des Stators positioniert.

Axial verlaufende Innenluftkanäle im Blechpaket des Stators würden zu größeren Jochquerschnitten führen, um den erforderlichen magnetischen Fluss gewährleisten zu können. Der eingeschränkte magnetische Querschnitt des Stators würde somit zur Reduzierung der radialen Wärmeleitung der Wicklungsstromwärmeverluste des Wicklungssystems und Eisenverlusten, also Hysterese und Wirbelstromverlusten in den Wassermantel führen.

Des Weiteren werden derartige dynamoelektrische Maschinen beispielsweise in elektrisch angetriebenen Fahrzeugen wie Elektrobussen oder Schienenfahrzeuge als auch in Werkzeugmaschinen eingesetzt, wo lediglich ein begrenzter Einbauraum zur Verfügung steht, was einer effizienten Kühlung entgegenstehen kann.

Bekannt sind Luftumwälzungen im Stirnraum geschlossener elektrischer Maschinen, als auch Wassermantelkühlungen von Statoren.

Ausgehend davon liegt der Erfindung die Aufgabe zugrunde, eine effiziente Kühlung einer hochausgenutzten dynamoelektrischen Maschine zu schaffen, die insbesondere für den Einsatz in elektrisch angetriebenen Fahrzeugen geeignet ist und trotz der kompakten, insbesondere mechanischen Anbindung innerhalb des Fahrzeugs eine effiziente Kühlung bereitstellt.

Die Lösung der gestellten Aufgabe gelingt durch eine elektrische Maschine mit
- einem Stator, mit einem Wicklungssystem, das in Nuten eines axial gestapelten Blechpakets angeordnet ist und an den Stirnseiten des Blechpakets Wickelköpfe ausbildet,
- einem Rotor, der drehfest mit einer Welle verbunden ist, und im Betrieb in elektromagnetischer Wechselwirkung mit dem Wicklungssystem des Stators steht, wobei der Rotor axial verlaufende Ausnehmungen aufweist, die einem Kühlmittelfluss dienen,
- einem Flüssigkeitsmantelgehäuse, das den Stator umfänglich umgibt und sich axial zumindest über die axiale Länge des Blechpakets des Stators erstreckt,
- Lagerschilden, die die Welle stützen und zusammen mit dem Flüssigkeitsmantelgehäuse das Innere der elektrischen Maschine abdichten,
- am Außenumfang des Flüssigkeitsmantelgehäuses axial verlaufende Kühlkanäle, die zusammen mit Ausnehmungen des Rotors einen geschlossenen Innenkühlkreislauf innerhalb der elektrischen Maschine bilden,
- wobei die elektrische Maschine über zumindest einige Leisten der Kühlkanäle am Außenumfang des Flüssigkeitsmantelgehäuses an oder innerhalb einem Fahrzeug befestigbar ist.

Des Weiteren gelingt die Lösung der gestellten Aufgabe durch ein Fahrzeug, insbesondere ein Traktionsfahrzeug oder Elektrobus mit einer erfindungsgemäßen elektrischen Maschine, wobei die elektrische Maschine über Leisten und/oder den außenliegenden Kühlkanälen innerhalb des Fahrzeugs befestigt ist.

Durch die erfindungsgemäße Kombination eines Innenkühlkreislaufs auf dem Rücken des Flüssigkeitsmantels mit der gleichzeitigen Aufhängung, also mechanischen Fixierung innerhalb eines elektrischen Fahrzeugs, wird sowohl der Stator durch direkte Kontaktierung mit dem Wassermantel als auch der Läufer durch den geschlossenen Innenkühlkreislauf ausreichend gekühlt.

Des Weiteren ist auch bei einem kompakten Einbau einer erfindungsgemäßen elektrischen Maschine in einem Fahrzeug oder Werkzeugmaschine eine ausreichende Kühlung und damit Effizienz gegeben.

Erfindungsgemäß ist dabei nunmehr auch eine ausreichende mechanische Fixierung innerhalb eines Einbauraumes oder einer Aufhängung eines Fahrzeugs gewährleistet.

Der Innenkühlkreislauf wird erfindungsgemäß dadurch gestaltet, dass der Flüssigkeitsmantel an einigen vorgegebenen axialen Abschnitten Durchbrüche aufweist, so dass eine Umlenkung des Kühlmediums aus der Maschine in den am äußeren Umfang befindlichen Kühlkanälen gelingt und von dort am anderen axialen Ende aus diesen Kühlkanälen in die Maschine erfolgt.

Der Flüssigkeitsmantel oder auch Flüssigkeitskühlmantel bildet ein Gehäuse zwischen den beiden Lagerschilden der elektrischen Maschine. Der Flüssigkeitskühlmantel erstreckt sich axial zumindest über die axiale Länge des Blechpakets des Stators.

Maximal erstreckt sich der Flüssigkeitskühlmantel axial von einem Lagerschild zum anderen Lagerschild. Damit kann auch zusätzlich der Wickelkopf des Wicklungssystems des Stators und/oder die Lagerschilde mitgekühlt werden.

Der Flüssigkeitskühlmantel kann dabei folgendermaßen aufgebaut sein. Ein Innenrohr und ein Außenrohr sind nahezu deckungsgleich und weisen die gleiche axiale Länge und Öffnungen bzw. Durchbrüche auf.

Eine andere mögliche Ausführung des Flüssigkeitsmantels weist ein Innenrohr auf, das die Öffnungen bzw. Durchbrüche zum Kühlkanal bzw. Kühlkanälen enthält und sich von einem Lagerschild zum anderen Lagerschild erstreckt. In einem vorgegebenen axialen Bereich der elektrischen Maschine, vorzugsweise dem Statorblechpaket ist ein von dem Innenrohr beabstandetes Außenrohr vorhanden, wobei der Zwischenraum den Flüssigkeitsmantel bildet.

Vorteilhafterweise sind derartige Kühlkanäle am Außenumfang des Flüssigkeitsmantelgehäuses verteilt angeordnet. Insbesondere ist dabei eine Anordnung der Kühlkanäle gegenüberliegend auf beiden Seiten des Flüssigkeitsmantels besonders geeignet, um auch eine derartige elektrische Maschine in einen vorgegebenen Einbauraum eines Fahrzeugs oder einer Werkzeugmaschine besonders einfach einzusetzen zu können.

Die Kühlkanäle werden vorteilhafterweise in ihrem Querschnitt U-förmig ausgebildet. Dabei sind zur Gestaltung des Kühlkanals zwei Leisten vorgesehen, die mit dem Flüssigkeitsmantelgehäuse in einem vorgegebenen Abstand verbunden, vorteilhafterweise verschweißt sind, wobei zur Abdeckung dieses zwischen den Leisten befindlichen Volumens eine Abdeckung, beispielsweise ein Blech an den Leisten befestigt wird. Damit ist ein Kühlkanal am Außenumfang des Flüssigkeitsmantelgehäuses geschaffen.

Über die Leisten kann nunmehr erfindungsgemäß diese dynamoelektrische Maschine in einer Aufhängung eines Fahrzeugs oder innerhalb eines anderen vorgegebenen Einbauraums positioniert werden.

Diese erfinderische Kombination von Aufhängung und Gestaltung des Kühlkanals kann somit als Schweißkonstruktion ausgeführt sein. Dabei werden zwei Stahlleisten in einem vorgegebenen parallelen Abstand auf das Flüssigkeitsmantelgehäuse geschweißt und ein vergleichsweise leichtes Abdeckblech eingeschweißt, das nur zur Führung des Kühlmediums beispielsweise von Luft oder einer Flüssigkeit geeignet ist.

Neben der mechanischen Funktion der Leisten, dienen diese Leisten der Kühlmittelführung bzw. Kühlkanalgestaltung am Außenumfang des Flüssigkeitsmantelgehäuses.

Alternativ zu der oben ausgeführten Schweißkonstruktion kann die erfindungsgemäße Kombination von Aufhängung und Kühlkanal auch als massives Bauteil ausgeführt sein, wobei dabei z.B. aus einem dickeren Stahlblech oder Aluminiumblock einer derartiger Kühlkanal spanabhebend herausgearbeitet wird. Dieses einstückige Element wird dann ebenso auf dem Flüssigkeitsmantelgehäuse positioniert. Dabei bilden, im Querschnitt betrachtet die Schenkel des Kühlkanals ebenso stabile Stege bzw. Leisten aus, an denen die elektrische Maschine im Fahrzeug oder einem Einbauraum fixiert und positioniert werden kann.

Durch diese Gestaltung des Kühlprinzips, mit zwei unabhängig voneinander in bzw. an der Maschine angeordneten Kühlsystemen, die jedoch thermisch gekoppelt sind, wird eine vergleichsweise hohe Effizienz der Maschine erhalten. Das eine Kühlsystem ist eine Flüssigkeitsmantelkühlung als Gehäuse um den Stator, der vor allem die Eisenverluste, also Hysterese-und Wirbelstromverluste abführt. Das weitere Kühlsystem ist ein Innenkühlkreislauf, der die Wärme u.a. aus dem Rotor und ggf. den Wickelköpfen des Stators an den Außenumfang des Stators führt und dort an die Flüssigkeitsmantelkühlung und/oder die Umgebung abgibt.

Als Kühlmedien eignet sich für die Flüssigkeitsmantelkühlung vor allem Wasser, während der Innenkühlkreislauf als Kühlmedium Öl oder gasförmige Medien wie Luft aufweisen kann.

Der Verlauf des Kühlmediums innerhalb der Flüssigkeitsmantelkühlung kann dabei z.B. mäandernd oder spiralförmig um den Stator ausgeführt sein.

Ebenso ist es vorstellbar, dass die Flüssigkeitsmantel im Wesentlichen aus zwei voneinander koaxial angeordneten und beabstandeten Zylindern, also im Wesentlichen einem Innen-und einem Außenrohr besteht.

Um die Maschine besonders vorteilhaft in der Fahrzeugkonstruktion unterzubringen, weisen die Leisten Befestigungsmöglichkeiten, beispielsweise Gewindelöcher auf, um eine Befestigung der dynamoelektrischen Maschine beispielsweise in einer Aufhängung eines Fahrzeugs durchführen zu können. Somit trägt auch die Befestigung der dynamoelektrischen Maschine beispielsweise in einer Aufhängung eines Fahrzeugs zur Verwindungssteifigkeit bei.

Die Erfindung sowie weitere vorteilhafte Ausgestaltungen der Erfindung werden anhand beispielhaft dargestellter Ausführungsbeispiele näher erläutert. Darin zeigen:
- FIG 1: eine perspektivische Darstellung einer dynamoelektrischen Maschine,
- FIG 2: einen Querschnitt eines Flüssigkeitsmantels,
- FIG 3: eine perspektivische Darstellung eines Flüssigkeitsmantels,
- FIG 4: einen Längsschnitt durch eine dynamoelektrische Maschine,
- FIG 5: Positionierung einer dynamoelektrischen Maschine in einer Aufhängung,
- FIG 6: eine Stirnansicht eines Antriebs,
- FIG 7: ein abgewickelter Flüssigkeitsmantel,
- FIG 8: ein Teillängsschnitt eines Flüssigkeitsmantels.

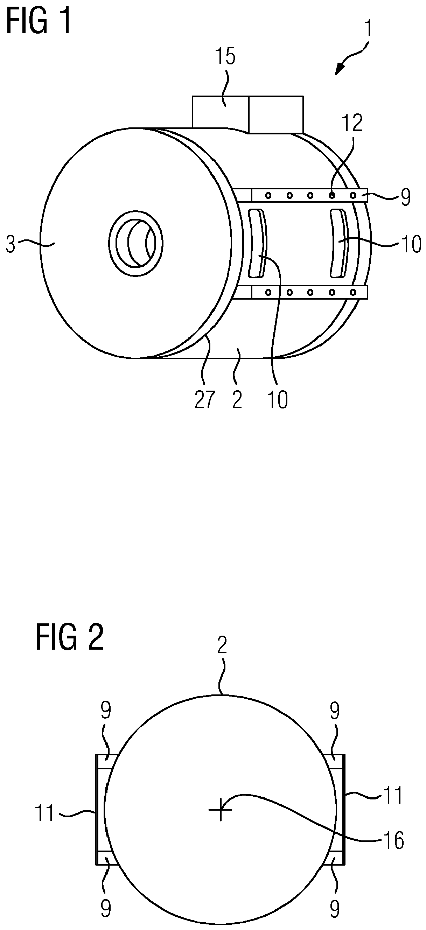

FIG 1 zeigt eine dynamoelektrische Maschine 1, die innerhalb eines Gehäuses angeordnet ist, wobei das Gehäuse vorzugsweise durch einen Flüssigkeitsmantel 2 gebildet ist, wobei die Maschine 1 an den Stirnseiten durch Lagerschilde 3 flüssigkeitsdicht abgeschlossen werden kann.

Alternativ oder ergänzend dazu kann in diesem Bereich eine rundum laufende Dichtnaht 27 vorgesehen werden.

Vorzugsweise wird durch diesen Flüssigkeitsmantel 2 über nicht näher dargestellt Ein- und Auslässe Wasser geführt.

Eine elektrische Zuleitung zu einem Wicklungssystem 6 der elektrischen Maschine 1 erfolgt über einen Klemmenkasten 15. Dargestellt sind hier des Weiteren Leisten 9, die parallel am Flüssigkeitsmantel 2 angebracht, insbesondere angeschweißt sind und die Gewindelöcher 12 aufweisen. Die beiden Leisten 9 schließen einen Raum ein, der vorzugsweise durch eine in dieser Darstellung nicht gezeigte Abdeckung 11 einen axial verlaufenden Kühlkanal 13 bildet. Die Leisten 9 sind axial länger als der Flüssigkeitskühlmantel 2, insbesondere zumindest um die axiale Ausdehnung der Öffnungen 10.

Zwischen den Leisten 9 im Bereich der axialen Enden des Flüssigkeitsmantels 2 sind prinzipiell Öffnungen 10 vorgesehen. Diese Öffnungen 10 verlaufen außerhalb des Flüssigkeitsmantels 2 und führen in das Innere der dynamoelektrischen Maschine 1.

FIG 2 zeigt in einem Querschnitt einen Flüssigkeitsmantel 2 der dynamoelektrischen Maschine 1, in das das Blechpaket eines Stators 5 eingesetzt bzw. eingepresst ist, um eine vergleichsweise gute thermische Anbindung von Blechpaket des Stators 5 an den Flüssigkeitsmantel 2 zu erhalten. An zwei sich gegenüberliegenden Seiten sind jeweils paarweise Leisten 9 angebracht, die durch eine Abdeckung 11 verbunden einen axial verlaufenden Kühlkanal 13 bilden. In diesem Kühlkanal 13 können sowohl Luft als auch andere Kühlmedien geleitet, gefördert und geführt werden. Es stellt sich somit eine geschlossener Kühlkreislauf das Innere der elektrischen Maschine 1 und den oder die Kühlkanäle 13 dar.

Die Flüssigkeitsmantelkühlung selbst ist dabei insbesondere mäander- oder spiralförmig ausgebildet.

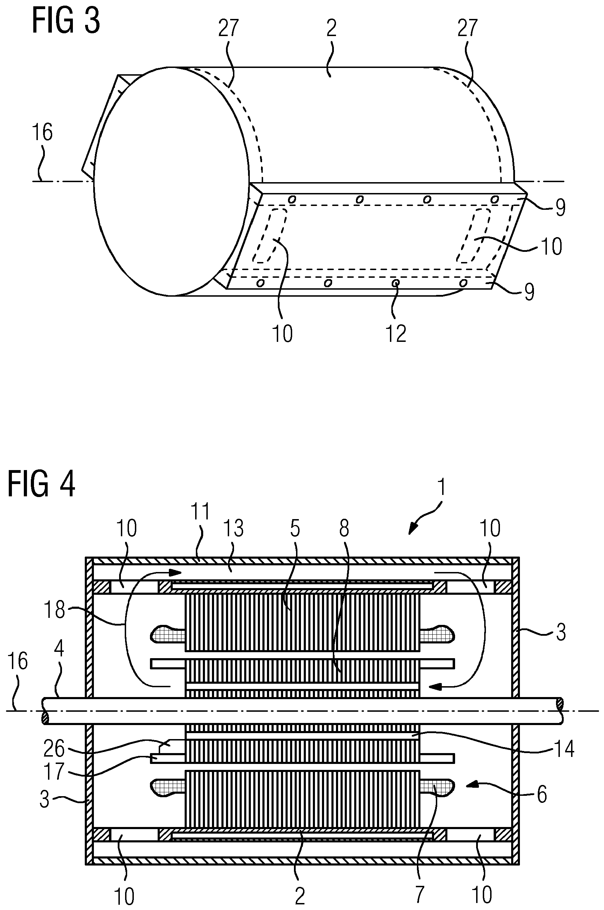

In einer weiteren Darstellung gemäß FIG 3 ist der Flüssigkeitsmantel 2 perspektivisch dargestellt, wobei dabei die achsparallelen Leisten 9 auf den gegenüberliegenden Seiten zu sehen sind, die durch die Abdeckung 11 den Kühlkanal 13 radial außerhalb des Flüssigkeitsmantel 2 bilden.

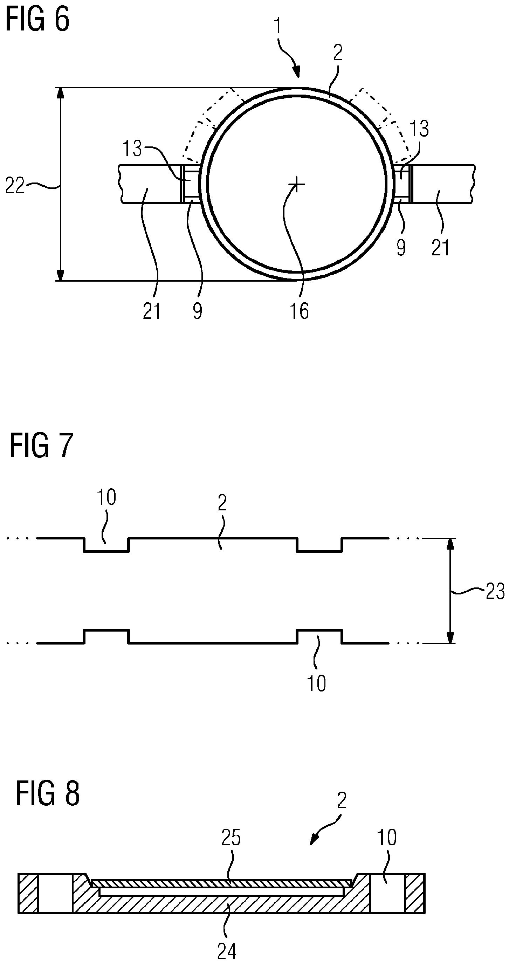

Falls in einer anderen Anordnung oder Aufhängung eines Fahrzeuges, in das die elektrische Maschine 1 eingebaut werden soll andere Anordnungen der Leisten 9 notwendig sind, weil die Leisten 9 nicht nur der Kühlkanalgestaltung sondern letztlich auch der Anbringung an ein Fahrwerk dienen, können diese Kühlkanäle auch mehrfachst am Umfang der Flüssigkeitsmantelkühlung angeordnet sein, wie dies u.a. auch der FIG 6 gestrichelt dargestellt entnommen werden kann. Dort ist beispielhaft die Einbauhöhe 22 vorgegeben, die eine in Umfangsrichtung mehrfache Kühlkanalausführung nicht zulässt.

FIG 4 zeigt in einem der dynamoelektrischen Maschine 1 das Blechpaket des Stators 5 mit seinen Wicklungssystem 6, das an den Stirnseiten des Blechpakets Wickelköpfe 7 ausbildet. Davon beabstandet, ist ein Rotor 8, der ebenfalls geblecht ausgeführt ist, drehfest auf einer Welle 4 angeordnet, die um eine Achse 16 drehbar in den Lagerschilden 3 gehalten ist. Der Rotor 8 kann dabei mit einem Kurzschlusskäfig 17 oder als permanenterregter Rotor 8 ausgeführt sein.

In dem vorliegenden Fall liegt ein Kurzschlusskäfig 17 innerhalb des Blechpakets des Rotors 8 vor. Dabei ist beispielhaft an einem Kurzschlussring des Kurzschlusskäfigs 17 ein oder mehrere Lüfterflügel 26 angebracht, vorzugsweise angeschweißt oder angegossen, der u.a. für den Transport des Kühlmediums des Innenkühlkreislaufs angezogen wird. Achsparallel zu der Welle 4 verlaufen Ausnehmungen 14 im Rotor 8, die ein Kühlmedium von einer Seite zur anderen Stirnseite der elektrischen Maschine 1 führen können.

Dadurch kann sich nunmehr erfindungsgemäß ein Innenkühlkreislauf einstellen, der radial außerhalb des Flüssigkeitsmantels 2, also radial außerhalb des Gehäuses verläuft. Der Kühlstrom 18 wird im Kühlkanal 13 in seinem axialen Verlauf rückgekühlt wird und auf der anderen Stirnseite der elektrischen Maschine 1 über die Öffnung 10 wieder in den Bereich einer Stirnseite mit Wickelkopf 7 und Kurzschlussring geleitet. Das Kühlmedium verläuft axial weiter dann in der oder den axial verlaufenden Ausnehmungen 14 des Rotors 8, um an der anderen Stirnseite wieder auszutreten und über den anderen Kurzschlussring und den Wickelkopf 7 und eine Öffnung 10 im Flüssigkeitsmantelgehäuse 2 wieder in den oder die Kühlkanäle 13 radial außerhalb des Flüssigkeitsmantels 2 zu gelangen.

Vorteilhafterweise übernehmen dabei die Leisten 9 nicht nur die Gestaltung des Kühlkanals 13 sondern dienen gleichzeitig der Anbringung und Aufhängung 21 in einem Fahrzeug. Des Weiteren können durch die Gestaltung der elektrischen Maschine 1 nunmehr einfache Lagerschilde 3 zur Fixierung der Welle 4 eingesetzt werden. Die Kühlkanäle 13 radial außerhalb des Flüssigkeitsmantels 2 liegen idealerweise einander gegenüber umso in geeigneter Art und Weise in einem Fahrzeug fixiert werden zu können.

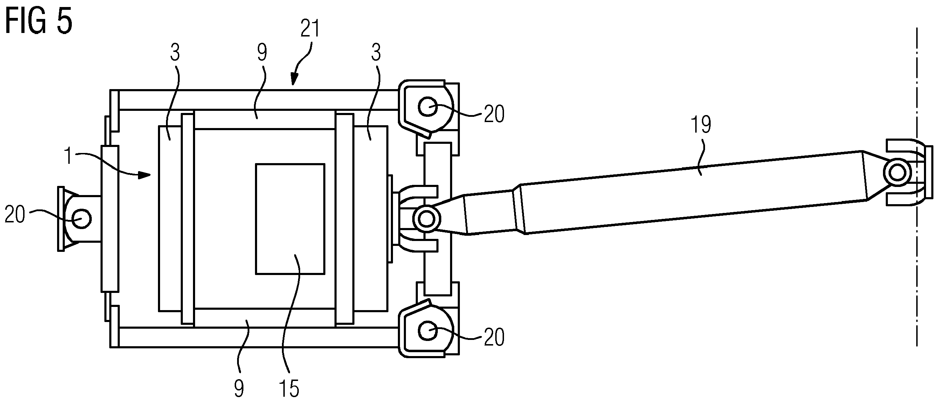

FIG 5 zeigt beispielhaft eine Aufhängung 21, an der die dynamoelektrische Maschine 1 über die Leisten 9 befestigt ist. Die Aufhängung 21 ist über Gummipuffer 20 in der weiteren mechanischen Konstruktion des Fahrzeugs positioniert. Das Drehmoment der dynamoelektrischen Maschine 1 wird über die Welle 4 an eine Kardanwelle 19 geführt.

FIG 6 zeigt in einer Seitenansicht die dynamoelektrische Maschine 1, die mittels der Leisten 9 der Kühlkanäle 13 in der Aufhängung 21 positioniert ist. Die Kühlkanäle 13 können dabei am Umfang der Wassermantelgehäuses 2 angeordnet sein, jedoch sollte die maximale Einbauhöhe 22 nicht überschritten werden. Beispielhaft sind weitere mögliche Kühlkanäle 13 gestrichelt dargestellt. Die Anzahl der Kühlkanäle 13 muss grundsätzlich mit der Anzahl der Öffnungen 10 korrespondieren, um eine ordnungsgemäße Kühlung zu gewährleisten. D.h. ein Kühlkanal 13 benötigt zwei Öffnungen 10, zwei Kühlkanäle 13 demnach vier Öffnungen 10 im Flüssigkeitsmantel 2, wie dies auch beispielhaft in FIG 7 dargestellt wurde.

Der Flüssigkeitskühlmantel 2 ist folgendermaßen aufgebaut. Ein Innenrohr gemäß FIG 7 und ein Außenrohr sind nahezu deckungsgleich, weisen die gleiche axiale Länge 23 auf. Das Außenrohr weist keine Öffnungen 10 auf. Das Innenrohr weist dabei die Öffnungen 10 auf. Der Flüssigkeitskühlmantel 2 erstreckt sich dabei von einem Lagerschild 3 zum anderen Lagerschild 3, lediglich unterbrochen von der oder den Öffnungen 10.

Eine andere Ausführung des Flüssigkeitskühlmantels gemäß FIG 8, wie sie prinzipiell auch der FIG 4 zu entnehmen ist, weist ein Innenrohr 24 auf, das die Öffnungen 10 enthält, sich von einem Lagerschild 3 zum anderen Lagerschild 3 erstreckt und in einem vorgegebenen axialen Bereich der elektrischen Maschine 1 von einem Außenrohr 25 umgeben ist. Dieser axiale Bereich ist zumindest die axiale Länge des Blechpakets des Stators 5 und bildet den Flüssigkeitskühlmantel 2.

Als Kühlmedium des Flüssigkeitsmantels 2 eignet sich insbesondere Wasser, das über nicht näher dargestellt Ein- bzw. Auslässe zu- bzw. abgeführt wird. Dabei wird Wärme aus dem Blechpaket des Stators 5, aus dem Wicklungssystem 6 des Stators 5 und auch dem Wickelkopf 7 abgeführt. Auch von dem den Innenkühlkreislauf, der Wärme auch von dem Wickelkopf 7, dem Rotor 8 und je nach Führung des Kühlstroms 18 auch die Lagerschilde 3 in den Kühlkanal 13 transportiert wird Wärme aufgenommen und abgeführt.

Zusätzliche Verrippungen an der Innenseite des Kühlkanals 13, insbesondere auf der Oberfläche des Flüssigkeitsmantels 2 und /oder den Leisten 9 verbessern die Wärmeabgabe des Kühlstroms 18 an den Flüssigkeitskühlmantel 2.

Als Kühlmedium des Innenkühlkreislaufes eignen sich Gase insbesondere Luft, aber auch elektrisch isolierende Flüssigkeiten wie Öl.

## Patentansprüche

1. Elektrische Maschine (1) mit
- einem Stator (5), mit einem Wicklungssystem (6), das in Nuten eines axial gestapelten Blechpakets angeordnet ist und an den Stirnseiten des Blechpakets Wickelköpfe (7) ausbildet,
- einem Rotor (8), der drehfest mit einer Welle (4) verbunden ist, und im Betrieb in elektromagnetischer Wechselwirkung mit dem Wicklungssystem (6) des Stators (5) steht, wobei der Rotor (8) axial verlaufende Ausnehmungen (14) aufweist, die einem Kühlmittelfluss dienen,
- einem Flüssigkeitsmantelgehäuse (2), das den Stator (5) umfänglich umgibt und sich axial zumindest über die axiale Länge des Blechpakets des Stators (5) erstreckt,
- Lagerschilden (3), die die Welle (4) stützen und zusammen mit dem Flüssigkeitsmantelgehäuse (2) das Innere der elektrischen Maschine (1) abdichten,
- am Außenumfang des Flüssigkeitsmantelgehäuses (2) axial verlaufende Kühlkanäle (13), die zusammen mit Ausnehmungen (14) des Rotors (8) einen geschlossenen Innenkühlkreislauf innerhalb der elektrischen Maschine (1) bilden,
- wobei die elektrische Maschine (1) über zumindest einige Leisten (9) der Kühlkanäle (13) am Außenumfang des Flüssigkeitsmantelgehäuses (2) an oder innerhalb einem Fahrzeug befestigbar ist.

2. Elektrische Maschine (1) nach Anspruch 1, **dadurch gekennzeichnet , dass** die Kühlkanäle (13) im Querschnitt betrachtet im Wesentlichen U-förmig ausgebildet sind.

3. Elektrische Maschine (1) nach Anspruch 2, **dadurch gekennzeichnet , dass** die U-förmigen Kühlkanäle (13) durch zwei am Flüssigkeitsmantelgehäuse (2) befestigbare Leisten (9) und einer Abdeckung (11) zwischen den Leisten (9) gebildet ist.

4. Elektrische Maschine (1) nach einem der vorhergehenden Ansprüche, **dadurch gekennzeichnet, dass** die Leisten (9) Gewindelöcher (12) aufweisen.

5. Fahrzeug, insbesondere Traktionsfahrzeug oder Elektrobus mit einer elektrischen Maschine (1) nach einem der vorhergehenden Ansprüche, **dadurch gekennzeichnet, dass** die elektrische Maschine (1) über Leisten (9) und/oder den außenliegenden Kühlkanälen (13) innerhalb des Fahrzeugs befestigt ist.
